# EUROPEAN PATENT APPLICATION

(11) **EP 2 141 857 A1**
(43) Date of publication of application: **06.01.2010**
(21) Application number: 09708382.8
(22) Date of filing: 15.01.2009
(51) Int. Cl.: H04L 12/24, H04L 29/12

(54) **SYSTEM, DEVICE AND METHOD FOR ACHIEVING SERVICE UPGRADE**

(30) Priority: 30.01.2008 CN 200810057209
(71) Applicant: Huawei Technologies Co., Ltd., Longgang District Shenzhen Guangdong 518129 (CN)
(72) Inventor: CAI, Liyuan, Shenzhen 518129 (CN); WU, Jimin, Shenzhen 518129 (CN); XUE, Dingsheng, Shenzhen 518129 (CN)
(74) Representative: Kreuz, Georg Maria
(86) International application number: PCT/CN2009/070166
(87) International publication number: WO 2009/097776

(57) **Abstract**

A system, an apparatus, and a method for upgrading a service are provided herein. The method includes: loading and registering the upgraded new service version, and retaining the service of the old version; receiving a service processing request, and sending the received service processing request to the service processing device which is loaded with the service version corresponding to the service processing request according to the stored mapping relation between the service processing request and the information about the version of the service. In this way, the data loss is reduced or avoided in the service upgrade process, and the service works normally after the upgrade.

## Description

### SYSTEM, APPARATUS, AND METHOD FOR UPGRADING SERVICES

This application claims priority to Chinese Patent Application No. 200810057209.6, filed with the Chinese Patent Office on January 30, 2008 and entitled "System, Apparatus, and Method for Upgrading Services", which is hereby incorporated by reference in its entirety.

### FIELD OF THE INVENTION

The present invention relates to communication technologies, and in particular, to a system, an apparatus, and a method for upgrading services.

### BACKGROUND

With emergence of new technologies in the communication field, some services provide new functions. Some of the new functions are developed on the basis of the old functions. In this case, to implement the new functions of a service, the service needs to be upgraded.

In the process of developing the present invention, the inventor finds that: In the existing technical solution to upgrading services, if a service loaded in a communication equipment needs to be upgraded, all other services loaded in the same communication equipment have to be stopped or migrated to other communication equipment. Only after completion of upgrading the service, the other services are able to resume operation. Consequently, the other normal services are vulnerable to data loss. Moreover, because the service to be upgraded does not exchange information between the new version and the old version, it is possible that after the new version takes the place of the old version, the service data which are active on the service of the old version are not migrated to that of the new version for further processing, and the service being upgraded is vulnerable to data loss and cannot work normally after the upgrade.

### SUMMARY

Embodiments of the present invention provide a system, an apparatus, and a method for upgrading a service to reduce or avoid data loss in the service upgrade process and let the service work normally after the upgrade.

A system for upgrading a service includes a communication agent, a naming center, a service access device, and a service processing device, as detailed below.

The service access device is connected with the communication agent and the service processing device, and the naming center is connected with the communication agent and the service processing device.

The communication agent is adapted to create and store service version information which includes the service name, service version address information, and a connection identifier (ID).

The naming center is adapted to: register the upgraded new service version, deregister the old service version, and report information to the communication agent according to the registration operation and the deregistration operation.

The service access device is adapted to: receive a service processing request from outside of the system, and send the received service processing request to the service processing device which is loaded with the service of the version corresponding to the service processing request according to the stored mapping relation between the service processing request and the service version information.

The service processing device is adapted to load the service version and handle the service processing request sent by the service access device.

A communication agent for upgrading a service includes:
an information receiving module, adapted to receive the reported information of registering the upgraded new service version or deregister the old service version; and
a service version information creating and storing module, adapted to create and store information about the version of the service according to the reported information of registering the upgraded new service version or deregister the old service version, where the information about the version of the service includes the service name, service version address information and a connection ID.

A service access device for upgrading a service includes:
a mapping relation storing module, adapted to store the mapping relation between the service processing request and the information about the version of the service which includes the service name, service version address information, and a connection ID;
a receiving module, adapted to receive a service processing request; and
a sending module, adapted to send the received service processing request to the service processing device which is loaded with the service version corresponding to the service processing request according to the mapping relation between the service processing request received by the receiving module and the information about the version of the service, where the mapping relation is stored in the mapping relation storing module.

A method for upgrading a service includes:
loading and registering the service of the upgraded version; and
receiving a service processing request, and sending the received service processing request to the service processing device which is loaded with the service version corresponding to the service processing request according to the stored mapping relation between the service processing request and the service version information.

The foregoing technical solution reveals that: The system loads and registers a new service version, and retains the old service version; and sends the received service processing request to the service processing device which is loaded with the service version corresponding to the service processing request according to the stored mapping relation between the service processing request and the service version information, thus reducing or avoiding data loss in the service upgrade process and letting the service work normally after the upgrade.

### BRIEF DESCRIPTION OF THE DRAWINGS

FIG. 1 shows a structure of a system for upgrading a service in an embodiment of the present invention;
FIG. 2 shows a structure of a communication agent for upgrading a service in an embodiment of the present invention;
FIG. 3 shows a structure of a service access device for upgrading a service in an embodiment of the present invention;
FIG. 4 is a flowchart of a method for upgrading a service in an embodiment of the present invention;
FIG. 5 is the first schematic diagram that shows the state of an upgrade process performed by a service upgrading system according to the service upgrading method provided in an embodiment of the present invention;
FIG. 6 is the second schematic diagram that shows the state of an upgrade process performed by a service upgrading system according to the service upgrading method provided in an embodiment of the present invention;
FIG. 7 is the third schematic diagram that shows the state of an upgrade process performed by a service upgrading system according to the service upgrading method provided in an embodiment of the present invention; and
FIG. 8 is the fourth schematic diagram that shows the state of an upgrade process performed by a service upgrading system according to the service upgrading method provided in an embodiment of the present invention.

### DETAILED DESCRIPTION

An embodiment of the present invention provides a system for upgrading a service loaded on a communication equipment (namely, a processor, or a computer used for communication). The system loads the upgraded new service version and the old service version onto different service processing devices, sends processing requests for the service of the new and old version to different service processing devices which run the service of the new version and the service of the old version respectively, and deregisters and deletes the old service version after all processing requests for the service of the old version are processed, thus implementing service upgrade smoothly and avoiding loss of service data in the service upgrade process.

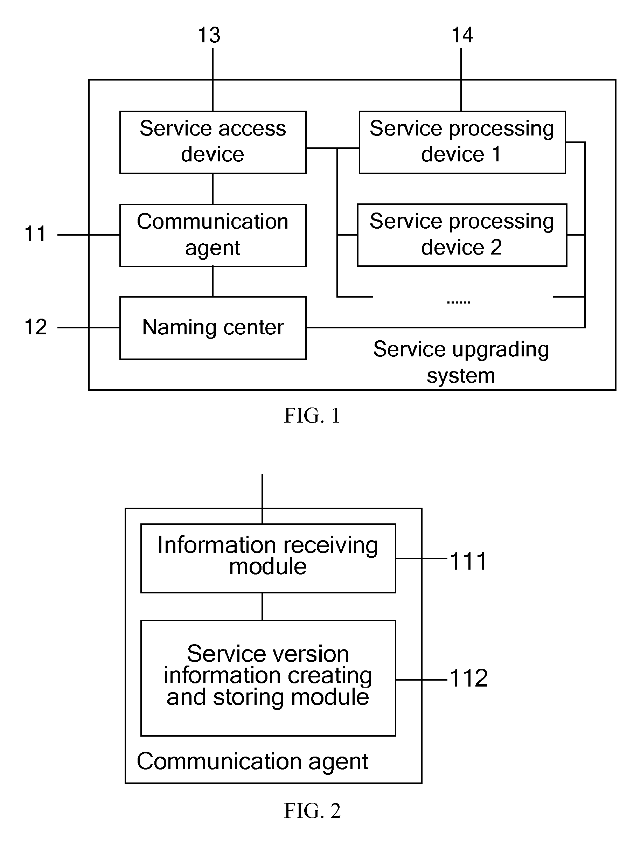

As shown in FIG. 1, a system for upgrading a service includes: a communication agent 11, a naming center 12, a service access device 13, and a service processing device 14. The service access device 13 is connected with the communication agent 11 and the service processing device 14; and the naming center 12 is connected with the communication agent 11 and the service processing device 14.

The communication agent 11 is adapted to create and store information about the version of the service which includes the service name, service version address information, and a connection ID.

The naming center 12 is adapted to register the upgraded service of the new version, deregister the service of the old version, and report information to the communication agent 11 according to the registration operation and the deregistration operation.

The service processing device 14 is adapted to load the service of the new version and handle a service processing request sent by the service access device 13, and return the processing result to the service access device 13.

In practice, if an upgraded service of a new version has been loaded onto a service processing device 14 in the system, the service processing device 14 sends the information about the upgraded service of the new version to the naming center 12 to register the service of the new version. The naming center registers the service of the new version according to the information about the upgraded service of the new version, and reports the information about the newly registered service to the communication agent 11.

After a service processing device 14 which is loaded with a service of an old version in the system has finished processing all processing requests for the service of the old version, the service processing device 14 initiates a service version deregistration operation to the naming center 12 to request deregistration of the service of the old version, the naming center 12 deregisters the service of the old version after receiving the request, and report the information about deregistration of the service version to the communication agent 11.

The foregoing description reveals that the naming center 12 manages the service processing devices in the system.

The service access device 13 is adapted to: receive a service processing request from outside of the system, and send the received service processing request to the service processing device 14 which is loaded with the service of a certain version corresponding to the service processing request according to the stored mapping relation between the service processing request and the information about the service of a version.

In practice, when the service upgrading system shown in FIG. 1 loads the service of a new upgraded version, the service of an old version may not be overwritten or deleted immediately. Therefore, the service upgrading system in an embodiment of the present invention includes at least two service processing devices 14 for loading the services of the new and that of the old versions respectively. If multiple services need to be upgraded, multiple service processing devices 14 are required.

It is understandable that the service processing device 14 may handle any service processing request in any method, including call access service processing request, multimedia Video On Demand (VOD) access service processing request, teleconference access processing request, multimedia message access processing request and any other kind of service processing request.

In another embodiment, after the service of the upgraded version is loaded onto an idle service processing device 14, the loaded service of the upgraded version needs to be registered to the naming center 12. After a service processing device 14 which is loaded with the service of the old version finishes processing all processing requests for the service of the old version, the service processing device 14 sends a service version deregistration request to the naming center 12, and deletes the service of the old version according to the response from the naming center 12, thus completing the service upgrade.

In an embodiment, the communication agent 11, naming center 12, service access device 13, and several service processing devices 14 in the service upgrading system may be software, and may be stored in any computer-readable storage medium. When being executed, the software or computer-readable storage medium performs the foregoing functions. In another embodiment, the communication agent 11, naming center 12, service access device 13, and several service processing devices 14 in the service upgrading system may be hardware which implements their respective functions described above.

In the foregoing system, the communication agent 11, the service access device 13, and several service processing devices 14 may communicate with each other through any communication protocol, such as TCP and HTTP etc; and the communication agent 11 may communicate with the naming center 12 through any set communication protocol.

The technical solution provided in the foregoing embodiments reveals that: information of a version of the service is set in the communication agent 11, the communication agent 11 works together with the naming center 12 to upgrade the version of the service, thus upgrading the service smoothly. A connection ID is set in the set information about the version of the service, thus ensuring the service of the new version to take over the service of the old version inconspicuously and avoiding loss of service data in the service upgrade process. Different types of service processing device addresses may be used in the set information about the version of the service, thus supporting service upgrade in a process, between processes, and between machines. At least two containers (namely, service processing devices 14) are set for the service to be upgraded, and the two containers are adapted to load the service of the old version or the service of the new version respectively. Therefore, a single service in the communication equipment can be upgraded independently without affecting other services, the communication equipment does not need to halt while a service is being upgraded, and other normal services never suffer from data loss as a result of equipment halt for service upgrade.

Another embodiment of the present invention provides a communication agent for upgrading a service. As shown in FIG. 2, the communication agent 11 includes:
an information receiving module 111, adapted to receive the reported information of registering the upgraded service of a new version or deregister the service of an old version; and
a service version information creating and storing module 112, adapted to create and store information about the version of the service according to the information of registering the upgraded service of the new version or deregister the service of the old version received by the information receiving module 111, where the information about the version of the service includes the service name, service version address information and a connection ID.

In an embodiment, the information receiving module 111 is adapted to receive the information of registering the upgraded service of the new version or deregister the service of the old version from the naming center 12 in the system.

In another embodiment, the information about the version of the service created by the service version information creating and storing module 112 may be saved as a service version information table, as shown in Table 1 and Table 2:

**Table 1**

| Service name | Old service version address | New service version address | Connection ID |
|---|---|---|---|
| APP/Module | Address0 | | 0 |

**Table 2**

| Service name | Old service version address | New service version address | Connection ID |
|---|---|---|---|
| APP/Module | Address0 | Address 1 | 1 |

The foregoing service version information table may include the service name, old service version address information, new service version address information, and a connection ID.

In the foregoing embodiment, the service name is the unified name of the service of the old version and the service of the new version, and the service name is unique in the system provided in this embodiment.

The old service version address information and the new service version address information may be collectively called "service version address information". The service version address information may include: physical IP address, virtual IP address, port ID, or internal ID of the service processing device, or any combination thereof. It is understandable that the service version address information involved in the second embodiment of the present invention is not limited to the foregoing address information, and may include other address information. The internal identifier of the service processing device may be a Universal Unique ID (UUID) or another identifier.

The service of the old version or the service of the new version may be loaded onto different service processing devices 14 in the system. Therefore, the old service version address information in Table 1 and Table 2 is essentially the address of the service processing device 14 of the old service version, and the service of the new version address information is essentially the address of the service processing device 14 which is loaded with the service of the new version. Therefore, Table 1 and Table 2 are equivalent to Table 3 and Table 4 respectively:

**Table 3**

| Service name | Service processing version is loaded) | Service processing device address (where the service of the new version is loaded) | Connection ID |
|---|---|---|---|
| APP/Mod ule | Address0 | | 0 |

**Table 4**

| Service name | Service processing device address (where the old service version is loaded) | Service processing device address (where the service of the new version is loaded) | Connection ID |
|---|---|---|---|
| APP/Module | Address0 | Address 1 | 1 |

Further, if the service version address is an IP address, the inter-machine upgrade process is applicable. That is, the service upgrade process is equivalent to the scenario that different service processing devices 14 which run the old version and the new version are set in different communication equipment respectively. If the service version address information is "IP address + port ID", the inter-process or intra-process service upgrade process is applicable. That is, the service upgrade process is additionally equivalent to the scenario that different service processing devices 14 which run the old version and the new version are set in the same communication equipment, and use the same operating system (intra-process service upgrade) or different operating systems (inter-process service upgrade).

In the foregoing embodiments, the connection ID is adapted to distinguish the service of the old version from the service of the new version. For example, "0" represents the old service version, and "1" represents the service of the new version. Alternatively, other different values represent the old service version or the service of the new version respectively. It is understandable that when the service of the new version represented by "1" becomes an old service version, "0" or another value may represent the updated service version, and so on.

Before service processing, the communication agent 11 may create a service version information table according to the service version loaded on the service processing device 14 that runs in the current system. The service version information table facilitates the service access device 13 in the system to perform the corresponding processing (the corresponding processing is detailed herein later). When a service processing device 14 in the system registers an upgraded new service version or deregisters an old service version, the communication agent 11 updates the service version information table according to the service of the new version information and the old service version information reported by the naming center 12. The update operation includes: adding the service of the new version address information, or deleting the old service version address information, and changing the connection ID.

The information receiving module 111 and the service version information creating and storing module 112 in the communication agent 11 for upgrading a service may be software, and may be stored in any computer-readable storage medium. When being executed, the software or computer-readable storage medium performs the foregoing functions. Alternatively, the information receiving module 111 and the service version information creating and storing module 112 in the communication agent 11 for upgrading a service may be a hardware module which implements their respective functions.

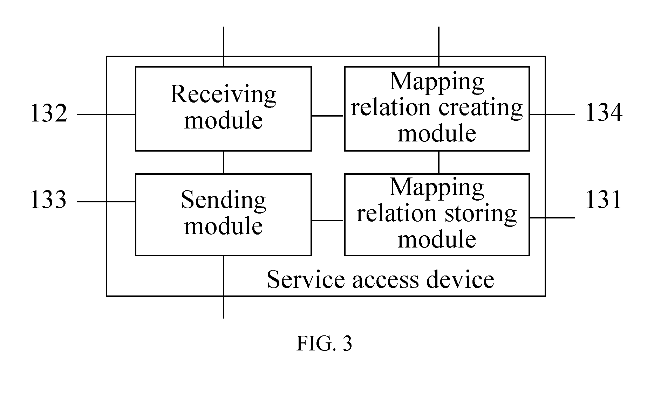

Another embodiment of the present invention provides a service access device for upgrading a service. As shown in FIG. 3, the service access device 13 includes:
a mapping relation storing module 131, adapted to store the mapping relation between a service processing request and information about the version of the service;
a receiving module 132, adapted to receive a service processing request; and
a sending module 133, adapted to send the received service processing request to the service processing device 14 which is loaded with the service of the version corresponding to the service processing request, according to the mapping relation between the service processing request received by the receiving module 132 and the information about the version of the service , where the mapping relation is stored in the mapping relation storing module 131.

Optionally, the service access device 13 further includes:
a mapping relation creating module 134, adapted to: if the service processing request received by the receiving module 132 is an initial service processing request, create a mapping relation between the initial service processing request and the information about the version of the service , and store the mapping relation in the mapping relation storing module 131.

In an embodiment, the sending module 133 is further adapted to send the initial service processing request to the service processing device 14 which is loaded with the service of the currently active version after the mapping relation creating module 134 creates a mapping relation between the initial service processing request and the information about the version of the service if the service processing request received by the receiving module 132 is an initial service processing request.

In an embodiment, the operation process of the service access device may include:

If the service processing request connected by the service access device 13 is an initial service processing request, the operation process of the service access device may include:
Step 1301: By querying the current service version information table in the communication agent 11, the service access device 13 obtains the information about the currently active service version, including the service name, version address information, and the current connection ID.
Step 1302: The service access device 13 creates and stores mapping relation between the initial service processing request and the information about the currently active service version.
Step 1303: After creating and storing mapping relation, the service access device 13 sends the received service processing request to the service processing device 14 on which loaded the service of the currently active version.

Accordingly, if the service processing request connected by the service access device 13 is a non-initial service processing request, the service access device 13 sends the service processing request to the service processing device 14 on which loaded the service of the version corresponding to this service processing request according to the stored mapping relation between the service processing request and the information about the version of the service.

Specifically, the service access device 13 may know which service handles the non-initial service processing request according to the stored mapping relation between the non-initial service processing request and the service name. Further, the service access device 13 may know which version (old version or new version) of the service handles the non-initial service processing request according to the stored mapping relation between the non-initial service processing request and the connection ID. Further still, the service access device 13 may know the address of the service processing device on which loaded the service of the old version or the service of the new version according to the stored mapping relation between the non-initial service processing request and the service version address, and send the non-initial service processing request to the service processing device 14 on which loaded the service of the old or new version corresponding to the non-initial service processing request according to the service version address information.

Besides, the service processing request connected by this service access device 13 may be any type of service processing request, for example, call access service processing request, multimedia VOD access service processing request, teleconference access processing request, multimedia message access processing request, and the examples here do not constitute any limitation on the technical solution.

The mapping relation storing module 131, the receiving module 132, the sending module 133, and the mapping relation creating module 134 in the foregoing service access device 13 for upgrading a service may be software, and may be stored in any computer-readable storage medium. When being executed, the software or computer-readable storage medium performs the foregoing functions. Alternatively, the mapping relation storing module 131, the receiving module 132, the sending module 133, and the mapping relation creating module 134 in the foregoing service access device 13 for upgrading a service may be hardware which implements their respective functions.

Another embodiment of the present invention provides a method for upgrading a service. The method loads and registers a new service version, and retains the service of the old version; and sends the received service processing request to the service processing device 14 on which loaded the service of the version corresponding to the service processing request, according to the stored mapping relation between the service processing request and the information about the version of the service, thus avoiding service data loss in the service upgrade process.

Supposing that the service upgrading system shown in FIG. 1 is applied between machines, between processes, and within a process, the method for upgrading a service is elaborated below.

The service upgrading system involved in the following process includes a service processing device 141 (on which the service of the old version is loaded) and a service processing device 142 (on which the service of the new version is loaded).

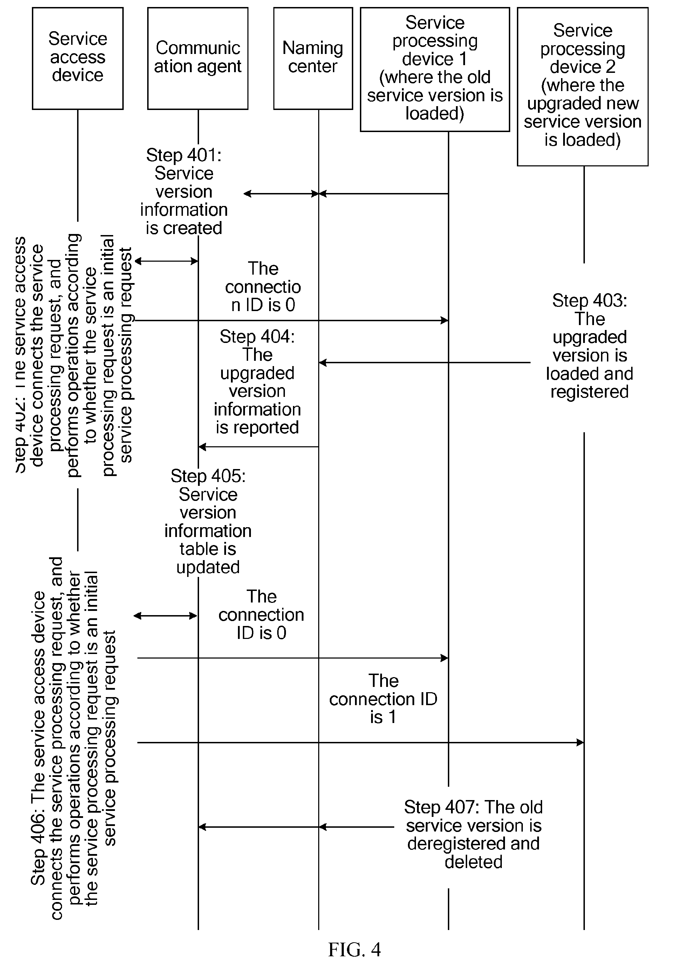

When the service upgrading system is applied to inter-machine upgrade, the method for upgrading a service in an embodiment of the present invention is shown in FIG. 4, and may include the following steps:
Step 401: The communication agent 11 creates a service version information table.

According to the information about the currently active service version, the communication agent 11 creates a service version information table, as shown in Table 5:

**Table 5**

| Service name | Service processing device 141 address | Service processing device 142 address | Connection ID |
|---|---|---|---|
| APP/Module | Address0 | | 0 |

In this case, the system includes a service processing device 141 on which loaded the service of the old version, and the information about the version of the service table created by the communication agent 11 includes the service name (APP/Module) which is currently active on the service processing device 141, the address (Address0) of the service processing device 141, and connection ID (0) of the service of the old version.

In this scenario, the service upgrading system provided in an embodiment of the present invention is applied to inter-machine service upgrade. That is, the service processing device 141 and the service processing device 142 are set in different communication equipment. Therefore, the address information of the service processing device 141 and the service processing device 142 may include: physical IP address, virtual IP address, or internal identifier of the service processing device, or any combination thereof.

Step 402: The service access device 13 connects the service processing request, and performs operations according to whether the service processing request is an initial service processing request.

In an embodiment, if the service processing request connected by the service access device 13 is an initial service processing request, the service access device 13 creates and stores mapping relation between the initial service processing request and the information about the currently active service version. The foregoing process may include following detailed steps:
Step 4021: By querying the current service version information table in the communication agent 11, the service access device 13 obtains the information about the service name (such as APP/Module) of the currently active service version, the service version address information (such as Address0), and the current connection ID (such as 0).
Step 4022: The service access device 13 creates and stores mapping relation between the initial service processing request and the information about the currently active service version.
Step 4023: After creating and storing mapping relation, the service access device 13 sends the initial service processing request to the service processing device 14 (such as service processing device 141) on which loaded the currently active service version.

In another embodiment, if the service processing request connected by the service access device 13 is a non-initial service processing request, the service access device 13 sends the non-initial service processing request to the corresponding service processing device 14 (such as service processing device 141) for processing the service according to the stored mapping relation between the non-initial service processing request and the information about the version of the service.

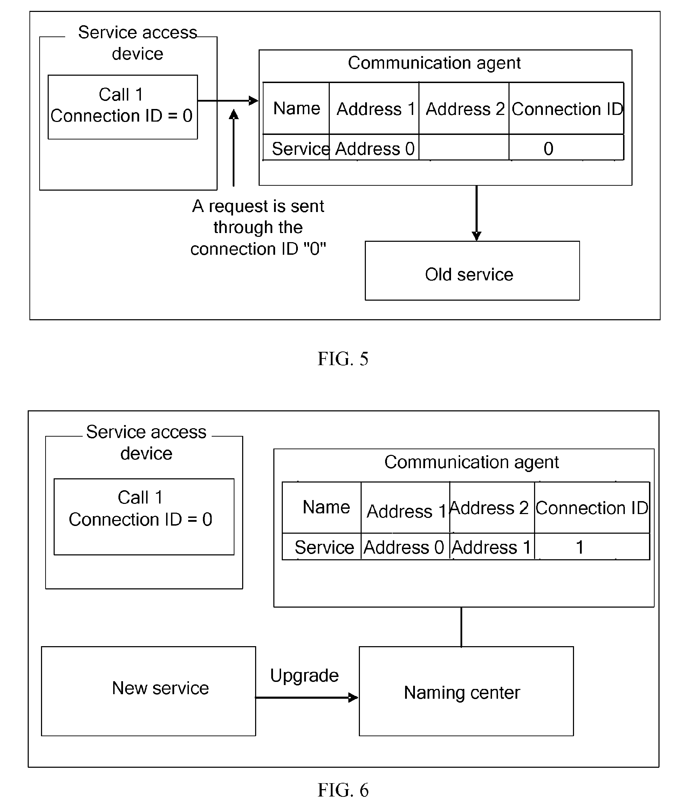

After step 402, the current running state of the system is shown in FIG. 5.

Step 403: The service of the upgraded version is loaded onto the service processing device 142, and the version of the service is registered onto the naming center.

If the service loaded onto the service processing device 141 needs to be upgraded, the system loads the upgraded service version onto another idle service processing device 14 (such as service processing device 142) in the system. In this case, the system does not deregister or delete the service of the old version from the service processing device 141 immediately, but retains the service of the old version, and deregisters and deletes the service of the old version only after all the service processing requests corresponding to the service of the old version are processed.

If the service processing device 142 finishes loading the service of the new version, the service processing device 142 needs to register the version onto the naming center 12 in the system.

Step 404: The naming center 12 reports the received new service version information to the communication agent 11.

According to the version information sent by the service processing device 142, the naming center finishes the registration operation, and sends the received version information to the communication agent 11 in the system.

Step 405: The communication agent 11 modifies the information about the version of the service table according to the received version information.

The communication agent 11 modifies the information about the version of the service table according to the information about the upgraded service version from the naming center 12, including the service name, the address of the service processing device 142, and the connection ID.

Table 6 is a modified service version information table.

**Table 6**

| Service name | Service processing device 141 address | Service processing device 142 address | Connection ID |
|---|---|---|---|
| APP/Module | Address0 | Address 1 | 1 |

The service version loaded on the service processing device 142 is a new version upgraded on the basis of the service version on the service processing device 141. Therefore, the service name in the service information table keeps unchanged. However, the address (Address1) of the service processing device 142 is added, and the connection ID (1) is modified. It indicates that the currently active service version of the system is the upgraded service version, and new service processing requests are received in the service processing device 142 on which the upgraded service version is loaded.

In this case, the system sets the service processing device 141 to the state of receiving no more service processing request, and the service processing device 141 handles only the processing requests for the service of the old version whose connection ID is 0.

After step 405, the current running state of the system is shown in FIG. 6.

Step 406: The service access device 13 receives the service processing request, and performs operations according to whether the service processing request is an initial service processing request.

For example, step 406 may include the following detailed steps:
Step 4061: If the service processing request received by the service access device 13 is an initial service processing request, then, by querying the current service version information table in the communication agent 11, the service access device 13 obtains the information about the currently active service version, including the service name (such as APP/Module), the service version address information (such as Address1), and the current connection ID (such as 1).
Step 4062: The service access device 13 creates and stores mapping relation between the initial service processing request and the information about the currently active service version.
Step 4063: After creating and storing mapping relation, the service access device 13 sends the initial service processing request to the service processing device 14 (such as service processing device 142) on which loaded the service of the currently active version.

In another embodiment, if the service processing request received by the service access device 13 is a non-initial service processing request, the service access device 13 sends the non-initial service processing request to the corresponding service processing device 14 for processing the service according to the stored mapping relation between the non-initial service processing request and the information about the version of the service. For example, the service access device 13 may know which service (such as APP/Module) handles the non-initial service processing request according to the stored mapping relation between the non-initial service processing request and the information about the version of the service the service name. The service access device 13 may know which version (old service version or new) of the service handles the non-initial service processing request according to the stored mapping relation between the non-initial service processing request and the connection ID. For example, if the stored connection ID is 0, the corresponding service version is the service of the old version. The service access device 13 may know the address of the service processing device 14 on which loaded the service of the old version or the service of the new version according to the stored mapping relation between the non-initial service processing request and the service version address information, and send the non-initial service processing request to the service processing device (such as service processing device 141) on which loaded the service of the version corresponding to the non-initial service processing request according to the obtained service version address information.

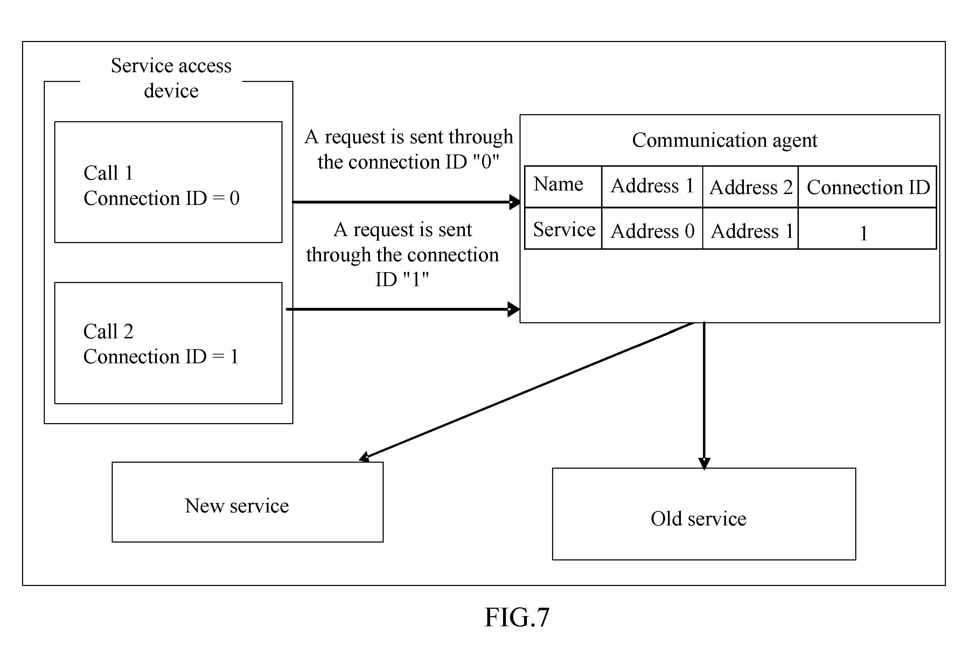

After step 406, the current running state of the system is shown in FIG. 7.

Step 407: After completion of processing all processing requests for the service of the old version, the service processing device 141 registers and deletes the service of the old version.

In an embodiment, after completion of processing all processing requests for the service of the old version corresponding to the service of the old version, the service processing device 141 sends a request of deregistering the service version to the naming center 12.

According to the request of deregistering the service version, the naming center 12 returns a deregistration response to the service processing device 141, and sends a request of deleting the service of the old version information to the communication agent 11.

According to the request of deleting the service of the old version information, the communication agent 11 deletes the information about the service of the old version from the information about the version of the service table. Table 7 is a service version information table after the service of the old version information is deleted.

**Table 7**

| Service name | Service processing device 141 address | Service processing device 142 address | Connection ID |
|---|---|---|---|
| APP/Module | | Address 1 | 1 |

In this embodiment, after the service processing device 141 finishes processing all processing requests for the service of the old version corresponding to the service of the old version, the service of the new version takes the place of the service of the old version, and the service of the old version is deleted. Therefore, the service is upgraded smoothly without losing service data; and the communication resources occupied by the old version are saved.

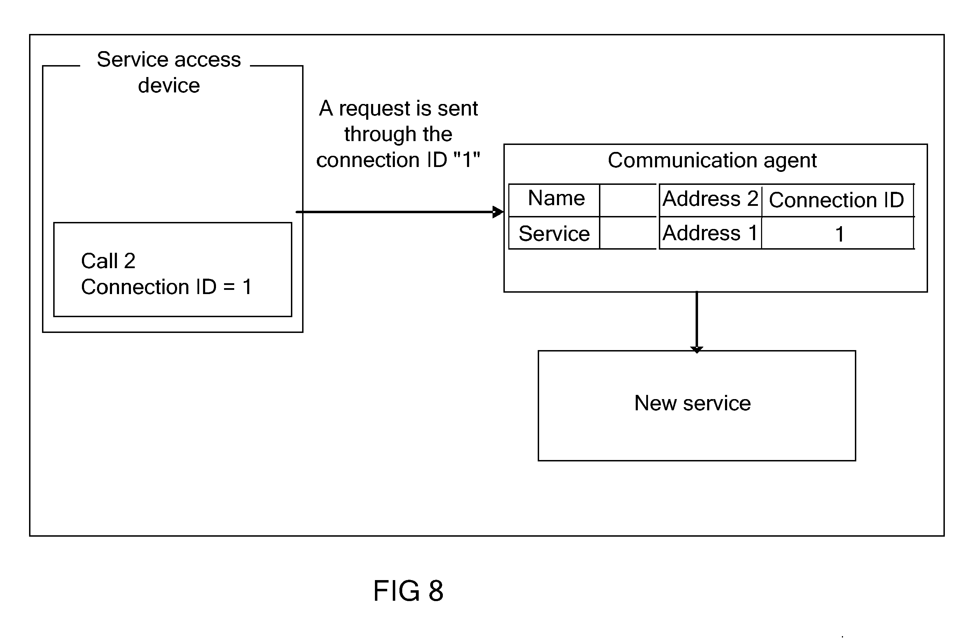

After step 407, the current running state of the system is shown in FIG. 8.

When the service upgrading system is applied in a process or between processes, the service upgrading method provided herein is similar to FIG. 4, but differs only in that: While the communication agent 11 creates the information about the version of the service table, the address information of the service processing 141 or 142 not only includes the physical IP address, virtual IP address, or the internal identifier of the service processing device, or any combination thereof; but also includes a port ID, thus upgrading the service in the process or between processes smoothly. The service upgrading method when the service upgrading system is applied in a process or between processes may be inferred through the technical solution described in step 401 to step 407, and is not repeated here any further.

In another embodiment of the method for upgrading a service, a percentage service data allowed to be lost may be set, or a service upgrade time may be set, and the service of the old version is deleted when it comes to the set percentage or the set service upgrade time. Therefore, the service is upgraded smoothly under certain conditions, and the service of the old version does not occupy too many system resources.

Through the service upgrading method provided herein, service version information is set in the communication agent 11, and the communication agent 11 works together with the naming center 12 to upgrade the service smoothly. A connection identifier is set in the information about the version of the service, the new service takes the place of the old service inconspicuously, and service data loss is avoided in the service upgrade process. Different types of service processing device addresses may be used in the set service version information table. Therefore, the service upgrading system under the present invention supports service upgrade in a process, between processes, and between machines. At least two containers (namely, service processing devices 14) are set for the service to be upgraded, and the two containers are adapted to load the service of the old version or the service of the new version respectively. Therefore, a single service in the communication equipment can be upgraded independently without affecting other services, the communication equipment does not need to halt while a service is being upgraded, and other normal services never suffer from data loss as a result of equipment halt for service upgrade.

The units included in the foregoing apparatus are sorted according to the functional logics, and are not limited to the foregoing sorting. Any sorting of the units is appropriate only if the corresponding functions are fulfilled. The names of the units are for the purpose of identification, and do not constitute any limitation on the protection scope of the present invention.

It is understandable to those skilled in the art that all or part of the steps of the method in foregoing embodiments may be implemented through hardware instructed by a program such as a computer program. The program may be stored in a readable storage medium such as Random Access Memory (RAM), magnetic disk, or compact disk.

Although the invention has been described through some preferred embodiments, the invention is not limited to such embodiments. It is apparent that those skilled in the art can make modifications and variations to the invention without departing from the spirit and scope of the invention. The invention is intended to cover the modifications and variations provided that they fall in the scope of protection defined by the following claims or their equivalents.

## Claims

1. A system for upgrading a service, comprising:
a communication agent, a naming center, a service access device, and a service processing device; wherein
the service access device is connected with the communication agent and the service processing device, and the naming center is connected with the communication agent and the service processing device;
the communication agent is adapted to create and store service version information which includes service name, service version address information, and a connection identifier, ID;
the naming center is adapted to register an upgraded new service version, deregister an old service version, and report information to the communication agent according to the registration operation and the deregistration operation;
the service access device is adapted to receive a service processing request from outside of the system, and send the received service processing request to the service processing device which is loaded with a service of a version corresponding to the service processing request according to a stored mapping relation between the service processing request and the service version information; and
the service processing device is adapted to load the service version and handle the service processing request sent by the service access device.

2. A communication agent for upgrading a service, comprising:
an information receiving module, adapted to receive reported information of registering an upgraded new service version or deregister an old service version; and
a service version information creating and storing module, adapted to create and store service version information according to the reported information of registering the upgraded new service version or deregister the old service version, where the service version information includes service name, service version address information and a connection ID.

3. A service access device for upgrading a service, comprising:
a mapping relation storing module, adapted to store a mapping relation between a service processing request and service version information which includes service name, service version address information, and a connection ID;
a receiving module, adapted to receive the service processing request; and
a sending module, adapted to send the received service processing request to a service processing device which is loaded with a service of a version corresponding to the service processing request, according to the mapping relation between the service processing request received by the receiving module and the information about the version of the service, where the mapping relation is stored in the mapping relation storing module.

4. The service access device according to the claim 3, wherein the device further comprises:
a mapping relation creating module, adapted to: create, when the service processing request received by the receiving module is an initial service processing request, a mapping relation between the initial service processing request and the information about the version of the service and store the mapping relation in the mapping relation storing module.

5. The service access device according to the claim 4, wherein,
the sending module is further adapted to send the initial service processing request to the service processing device which is loaded with the service of the currently active version after the mapping relation creating module creates the mapping relation between the initial service processing request and the information about the version of the service, if the service processing request received by the receiving module 132 is the initial service processing request.

6. A method for upgrading a service, comprising:
loading and registering a service of an upgraded version; and
receiving a service processing request, and sending the received service processing request to a service processing device which is loaded with the service of a version corresponding to the service processing request according to a stored mapping relation between the service processing request and the service version information.

7. The method of claim 6, wherein the method further comprises creating and storing information about the version of the service, where the information about the version of the service includes service name, service version address information and a connection ID; wherein
the service name is a unified name of the service of the old version and the service of the new version;
the service version address information comprises the old service version address information and the new service version address information;
the connection ID is adapted to distinguish the service of the old version from the service of the new version.

8. The method according to the claim 7, wherein:
the address of the service processing device comprises at least one of: a physical IP address, a virtual IP address, and an internal identifier of the service processing device; or,
the address of the service processing device comprises a port ID and at least one of: a physical IP address, a virtual IP address, and an internal identifier of the service processing device.

9. The method according to claim 7, wherein the method further comprises:
adding the service of the new version address information according to the upgraded version address information, ,or deleting the old service version address information, and changing the connection ID.

10. The method according to the claim 9, wherein, after loading and registering the service of the upgraded version, the service processing device which loads the service of the un-upgraded version only process the service processing request for the service of the un-upgraded version.

11. The method according to the claim 10, wherein the sending the received service processing request to the service processing device comprises:
if the service processing request is an initial service processing request, creating and storing the mapping relation between the service processing request and the information about the version of the service, and sending the initial service processing request to the service processing device which is loaded with the service of the currently active version;
if the service processing request is a non-initial service processing request, sending the non-initial service processing request to the corresponding service processing device for processing the service, according to the stored mapping relation between the non-initial service processing request and the information about the version of the service.

12. The method according to the claim 11, wherein the sending the received service processing request to the service processing device according to the stored mapping relation comprises:
according to the stored mapping relation between the non-initial service processing request and the service name, obtaining which service handles the received service processing request;
according to the stored mapping relation between the non-initial service processing request and the connection ID, obtaining which version of the service handles the service processing request;
according to the stored mapping relation between the service processing request and the service version address, obtaining the address of the service processing device which is loaded with the service of the version; and
sending the received service processing request to the service processing device according to the obtained address of the service processing device.

13. The method according to any one of the claims 6∼12, wherein the method further comprises:
after the service processing device finishes processing all service processing requests of old version, deregistering and deleting the service of the old version.
